# EUROPEAN PATENT SPECIFICATION

(11) **EP 3 467 657 B1**
(45) Date of publication and mention of the grant of the patent: **07.04.2021**
(21) Application number: 18198152.3
(22) Date of filing: 02.10.2018
(51) Int. Cl.: G06F 11/07, G06F 11/30, G06F 11/32

(54) **SMART PRIORITY SYSTEM FOR ENTERPRISE ALERTS**
INTELLIGENTES PRIORITÄTSSYSTEM FÜR UNTERNEHMENSWARNUNGEN
SYSTÈME DE PRIORITÉ INTELLIGENT POUR ALERTES D'ENTREPRISE

(30) Priority: 03.10.2017 US 201715723717
(43) Date of publication of application: 10.04.2019
(73) Proprietor: ServiceNow, Inc., Santa Clara, California 95054 (US)
(72) Inventor: MAKOVSKY, Bnayahu, Santa Clara, California 95054 (US); HASDAI, Netta, Santa Clara, California 95054 (US); SHIF, Vadim, Santa Clara, California 95054 (US); MARGALIT, Adar, Santa Clara, California 95054 (US); BARAK, Yotam, Santa Clara, California 95054 (US)
(74) Representative: Boult Wade Tennant LLP

(56) References cited:
- US-A1- 2003 093 514
- US-A1- 2006 241 901
- US-A1- 2010 192 228
- US-B1- 9 601 000

## Description

### TECHNICAL FIELD

The embodiments described herein relate generally to configuration management databases (CMDBs) and, more particularly, to scoring and/or prioritizing enterprise alerts in an intelligent fashion.

### BACKGROUND

Cloud computing relates to the sharing of computing resources that are generally accessed via the Internet. In particular, a cloud computing infrastructure allows users, such as individuals and/or enterprises, to access a shared pool of computing resources, such as servers, storage devices, networks, applications, and/or other computing based services. By doing so, users are able to access computing resources on demand that are located at remote locations, which resources may be used to perform a variety computing functions, e.g., storing and/or processing large quantities of computing data. For enterprise and other organization users, cloud computing provides flexibility in accessing cloud computing resources without accruing large up-front costs, such as purchasing expensive network equipment or investing large amounts of time in establishing a private network infrastructure. Instead, by utilizing cloud computing resources, users are able redirect their resources to focus on their enterprise's core functions.

In today's communication networks, examples of cloud computing services a user may utilize include so-called software as a service (SaaS) and platform as a service (PaaS) technologies. SaaS is a delivery model that provides software as a service rather than an end product. Instead of utilizing a local network or individual software installations, software is typically licensed on a subscription basis, hosted on a remote machine, and accessed by client customers as needed. For example, users are generally able to access a variety of enterprise and/or information technology (IT)-related software via a web browser. PaaS acts an extension of SaaS that goes beyond providing software services by offering customizability and expandability features to meet a user's needs. For example, PaaS can provide a cloud-based developmental platform for users to develop, modify, and/or customize applications and/or automating enterprise operations without maintaining network infrastructure and/or allocating computing resources normally associated with these functions.

Within the context of cloud computing solutions for CMDBs, users may be asked to deal with ever increasing amounts of data, e.g., with respect to the number of Configuration Items (CIs) stored in the CMDB (including such CIs' relevant metadata, such as manufacturer, vendor, location, etc.), as well as the alerts, service metrics, and maintenance status information related to such CIs. In fact, the amount of data collected and stored in today's cloud computing solutions, such as CMDBs, may be orders of magnitude greater than what was historically collected and stored. Users tasked with automating and/or troubleshooting business, IT, and/or other organization-related functions (e.g., incident tracking and/or help desk-related functions) may be required to navigate ever increasing amounts of data to properly and efficiently perform their job functions. As a result, it can be difficult for users of such CMDBs to appreciate or understand how the various alerts raised within an enterprise system compare to each other, e.g., with respect to severity, business criticality, number of affected system components, etc. Thus, triaging times, debugging times, root cause analysis, and general alert prioritization and management continue to be potential areas of improvement for software developers and application vendors. The following embodiments address improvements to the presentation and prioritization of enterprise alerts to address at least these and other issues relating to the recommendation of corrective actions and/or probable causes of alerts, in order to provide an enhanced user experience.

In US9601000, there is described a technique that provides alert prioritization. The technique involves selecting attributes to use as alert scoring factors. The technique further involves updating, for an incoming alert having particular attribute values for the selected attributes, count data to represent encounter of the incoming alert from perspectives of the selected attributes. The technique further involves generating an overall significance score for the incoming alert based on the updated count data. The overall significance score is a measure of alert significance relative to other alerts. Scored alerts then can be sorted so that investigators focus on the alerts with the highest significance scores. Such a technique is well suited for adaptive authentication (AA) and Security Information and Event Management (SIEM) systems among other alert-based systems such as churn analysis systems, malfunction detection systems, and the like.

In US2010/192228, there is described a device, method, and program product for prioritizing security flaw mitigation tasks. The device, method, and program product are configured to receive, at a risk analysis engine, one or more business service models from a configuration management database, wherein the one or more business service models each comprises a set of configuration items, and wherein the one or more business service models each indicate a type of configuration item and a connectivity of the configuration item. The set of configuration items are sent to a vulnerability assessment tool to obtain one or more vulnerability assessment scores for each configuration item within the set of configuration items. A risk score for each configuration item is then determined. In turn, a prioritized list of configuration items is output based on the risk score of each configuration item.

In US2006/241901, a method and system are provided for comparing a focal product with several comparison products. First, selecting a focal product and several attributes relating to the focal product and the comparison products, standardizing and weighting the attributes, and determining for each weighted attribute an attribute score. Next, based on the attribute score, calculating a total score for each comparison product, and based on the total score, presenting to a user or purchaser the comparison products most relevant to the user's criteria.

US2003/093514 describes use of Bayesian techniques to prioritize alerts or alert groups generated by intrusion detection systems and other information security devices, such as network analyzers, network monitors, firewalls, antivirus software, authentication services, host and application security services, etc. In one example, alerts are examined for the presence of one or more relevant features, such as the type of an attack, the target of an attack, the outcome of an attack, etc. At least a subset of the features is then provided to a real-time Bayes network, which assigns relevance scores to the received alerts or alert groups. In another example, a network manager (a person) can disagree with the relevance score assigned by the Bayes network, and give an alert or alert group a different relevance score. The Bayes network is then modified so that similar future alerts or alert groups will be assigned a relevance score that more closely matches the score given by the network manager.

### SUMMARY

The following presents a simplified summary of the disclosed subject matter in order to provide a basic understanding of some aspects of the subject matter disclosed herein. This summary is not an exhaustive overview of the technology disclosed herein. It is not intended to identify key or critical elements of the invention or to delineate the scope of the invention. Its sole purpose is to present some concepts in a simplified form as a prelude to the more detailed description that is discussed later. The invention is defined in detail in the appended independent claims 1, 6 and 14.

In one embodiment, a system that provides the ability to display and/or traverse the various enterprise alerts comprises, a first trigger queue for storing alert triggers, a second trigger queue for storing changes in the topology or status of CIs stored in the CMDB, a smart priority score calculation module, a non-transitory memory, and one or more hardware processors configured to read instructions from the non-transitory memory. When executed, the instructions can cause the one or more hardware processors to store one or more alert items in the aforementioned first trigger queue and store one or more topology change items or service status change items in the aforementioned second trigger queue.

A processing job may be run (e.g., at a predetermined interval or in response to updates to the various trigger queues) to identify each alert item in the first trigger queue needing further processing, e.g., to update the priority score of the respective alert. To calculate the priority score for a respective alert, the system may first obtain a score value, e.g., from a category mapping table, in each of one or more categories. The value of each score may be configured to relate to a characteristic or degree of the corresponding category in the respective alert item. For example, an alert severity value of 'critical' may map to a score value of '4', whereas an alert severity value of 'minor' may map to a score value of '2,' depending on what is specified in a category mapping table for the 'alert severity' category. Next, the system may obtain a weight value, e.g., from a category order table, corresponding to each of the one or more categories, wherein each weight value relates to an importance or criticality of the corresponding category. For example, the alert severity category may have a weight value of 100,000, whereas another category of alert characteristic may have a weight value of 10.

Finally, the system may calculate, e.g., with a priority score calculation module, a so-called 'smart priority' score for the respective alert item, e.g., by adding together the products of each of the one or more score values for the respective alert item and its corresponding weight value. In some embodiments, the 'smart priority' score may be further enhanced via the application of supervised or semi-supervised machine learning techniques to historical user activity data for the CMDB. Based on the needs of a given implementation, the priority scores of open alerts pending in the system may be recalculated at predetermined intervals or in response to the storage of a trigger object indicating a change in system conditions that affects (or potentially affects) the priority level of a given alert.

In some embodiments, the system also provides an improved user interface for displaying the one or more alert items, e.g., wherein the one or more alert items are sorted in a ranked list based, at least in part, on their respective priority scores. In some embodiments, the user interface may also group the various alert items into 'buckets,' e.g., based on the criticality of the alerts in each respective group, such as "High," "Medium," and "Low." The user interface may also present the user with a wide array of other relevant information regarding the one or more alert items, such as: the source of an alert; the name or type of CI affected by an alert; the node or IP address where an alert was raised; the identity of a user assigned to an alert; the location of an alert; the name, number, and/or owner of business services impacted by the alert; historical metrics related to the alert; as well as various potential options for resolving, reporting, or notifying others about a given alert.

According to still other embodiments, the user interface may provide further insights to a user regarding a given alert, e.g.: how often a given alert (or type of alert) has been repeated for the current CI (or related CIs); the incident history for the current CI (or related CIs); the changes history for the current CI (or related CIs); and/or the logged bug history for the current CI (or related CIs). These insights may also include suggestions of how to resolve the alert and/or links to articles explaining the alert and possible corrective actions that may be taken (or that have been successfully taken in the past).

In other embodiments, methods to perform the various enterprise alert prioritizing and presentation techniques summarized above are disclosed. In still other embodiments, non-transitory program storage devices are disclosed, which are readable by programmable control devices and which store instructions configured to cause one or more programmable control devices to perform the various alert presentation and prioritization techniques summarized above.

### BRIEF DESCRIPTION OF DRAWINGS

For a more complete understanding of this disclosure, reference is now made to the following brief description, taken in connection with the accompanying drawings and detailed description, wherein like reference numerals represent like parts.
FIG. **1** is a block diagram of an embodiment of a cloud computing system where embodiments of the present disclosure may operate.
FIG. **2** is a block diagram of an embodiment of a multi-instance cloud architecture where embodiments of the present disclosure may operate.
FIG. **3** is a block diagram of components and interactions of those components, according to one or more embodiments of the present disclosure.
FIG. **4A** is a simplified diagram of various database tables, according to one or more embodiments of the present disclosure.
FIG. **4B** illustrates an exemplary alert smart priority calculation, according to one or more embodiments of the present disclosure.
FIG. **5** illustrates various components of a system for calculating smart priorities for alert records, according to one or more embodiments of the present disclosure.
FIG. **6** illustrates an exemplary user interface page for viewing information related to alert records, according to one or more embodiments of the present disclosure.
FIG. **7** illustrates another exemplary user interface page for viewing information related to alert records, according to one or more embodiments of the present disclosure.
FIG. **8** is a flowchart of an embodiment of a method that calculates smart priorities for alert records.
FIG. **9** is a block diagram illustrating an embodiment of a computing system for use with techniques described herein.

### DESCRIPTION OF EMBODIMENTS

In the following description, for purposes of explanation, numerous specific details are set forth in order to provide a thorough understanding of the embodiments disclosed herein. It will be apparent, however, to one skilled in the art that the disclosed embodiments may be practiced without these specific details. In other instances, structure and devices are shown in block diagram form in order to avoid obscuring the disclosed embodiments. References to numbers without subscripts or suffixes are understood to reference all instance of subscripts and suffixes corresponding to the referenced number. Moreover, the language used in this disclosure has been principally selected for readability and instructional purposes, and may not have been selected to delineate or circumscribe the inventive subject matter, resort to the claims being necessary to determine such inventive subject matter. Reference in the specification to "one embodiment" or to "an embodiment" means that a particular feature, structure, or characteristic described in connection with the embodiments is included in at least one embodiment.

The terms "a," "an," and "the" are not intended to refer to a singular entity, unless explicitly so defined, but, rather, are intended to include the general class of which a specific example may be used for illustration. The use of the terms "a" or "an" may therefore mean any number that is at least one, including "one," "one or more," "at least one," and "one or more than one." The term "or" means any of the alternatives and any combination of the alternatives, including all of the alternatives, unless the alternatives are explicitly indicated as mutually exclusive. The phrase "at least one of' when combined with a list of items, means a single item from the list or any combination of items in the list. The phrase does not require all of the listed items unless explicitly so defined.

As used herein, the term "computing system" refers to a single electronic computing device that includes, but is not limited to a single computer, virtual machine, virtual container, host, server, laptop, and/or mobile device, or to a plurality of electronic computing devices working together to perform the function described as being performed on or by the computing system.

As used herein, the term "medium" refers to one or more non-transitory physical media that together store the contents described as being stored thereon. Embodiments may include non-volatile secondary storage, read-only memory (ROM), and/or random-access memory (RAM).

As used herein, the term "application" refers to one or more computing modules, programs, processes, workloads, threads and/or a set of computing instructions executed by a computing system. Example embodiments of an application include software modules, software objects, software instances and/or other types of executable code.

As used herein, the term "configuration item" or "CI" refers to a record for any component (e.g., computer, device, piece of software, database table, script, webpage, piece of metadata, etc.) in an enterprise network, for which all relevant data, such as manufacturer, vendor, location, etc. is stored in a CMDB.

Various embodiments are disclosed herein that provide users of a cloud computing system with the ability to display, prioritize, and/or handle enterprise alerts, e.g., in the form of a sorted list. In some embodiments, these alerts may be ranked according to a 'smart priority' calculation. The 'smart priority' calculation may take into account a number of factors related to given alert, e.g.: severity level, business criticality level, role, number of affected system components, types of affected system components, etc. These factors may be combined in the 'smart priority' calculation in a hierarchical fashion, e.g., based on a predetermined (or user-customized ranking) of the importance and/or weighting of the various factors. By seeing the historical and status metadata information relating to the alerts, users may more quickly understand which alerts to address first-and what possible solutions may be employed in order to close out the open alerts in the system.

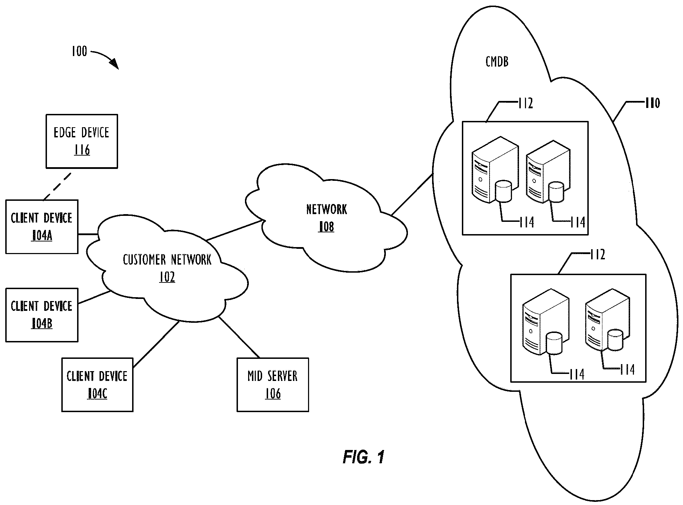

Turning now to FIG. **1****,** a schematic diagram of an embodiment of a computing system **100,** such as a cloud computing system, where embodiments of the present disclosure may operate, is illustrated. Computing system **100** may include a client network **102,** network **108** (e.g., the Internet), and CMDB platform **110** network. In one embodiment, the customer network **102** may be a local private network, such as local area network (LAN) that includes a variety of network devices that include, but are not limited to switches, servers, and routers. In another embodiment, the customer network **102** represents an enterprise network that could include one or more LANs, virtual networks, data centers **112,** and/or other remote networks. As shown in FIG. **1****,** the customer network **102** is able to connect to one or more client devices **104A-C** so that the client devices are able to communicate with each other and/or with the network hosting the CMDB platform service **110.** The client devices **104A-C** may be computing systems and/or other types of computing devices generally referred to as Internet of Things (IoT) devices that access cloud computing services, for example, via a web browser application or via an edge device **116** that may act as a gateway between the client device and a remote device. FIG. **1** also illustrates that the customer network **102** includes a management, instrumentation, and discovery (MID) server **106** that facilitates communication of data between the network hosting the CMDB platform service **110,** other external applications, data sources, and services, and the customer network **102.** Although not specifically illustrated in FIG. **1****,** the customer network **102** may also include a connecting network device (e.g., a gateway or router) or a combination of devices that implement a customer firewall or intrusion protection system.

FIG. **1** illustrates that customer network **102** is coupled to a network **108.** The network **108** may include one or more computing networks available today, such as other LANs, wide area networks (WAN), the Internet, and/or other remote networks, in order to transfer data between the client devices **104A-C** and the network hosting the CMDB platform service **110.** Each of the computing networks within network **108** may contain wired and/or wireless programmable devices that operate in the electrical and/or optical domain. For example, network **108** may include wireless networks, such as cellular networks (e.g., Global System for Mobile Communications (GSM) based cellular network), WiFi® networks (WIFI is a registered trademark owned by Wi-Fi Alliance Corporation)), and/or other suitable radiobased network as would be appreciated by one of ordinary skill in the art upon viewing this disclosure. The network **108** may also employ any number of network communication protocols, such as Transmission Control Protocol (TCP) and Internet Protocol (IP). Although not explicitly shown in FIG. **1****,** network **108** may include a variety of network devices, such as servers, routers, network switches, and/or other network hardware devices configured to transport data over networks.

In FIG. **1****,** the network hosting the CMDB platform service **110** may be a remote network (e.g., a cloud network) that is able to communicate with the client devices **104A-C** via the customer network **102** and network **108.** The network hosting the CMDB platform service **110** provides additional computing resources to the client devices **104A-C** and/or customer network **102.** For example, by utilizing the network hosting the CMDB platform service **110,** users of client devices **104A-C** are able to build and execute applications, such as CMDBs or other automated processes for various enterprise, IT, and/or other organization-related functions, such as alert processing and handling. In one embodiment, the network hosting the CMDB platform service **110** includes one or more data centers **112,** where each data center **112** could correspond to a different geographic location. Each of the data center **112** includes a plurality of server instances **114,** where each server instance **114** can be implemented on a physical computing system, such as a single electronic computing device (e.g., a single physical hardware server) or could be in the form a multi-computing device (e.g., multiple physical hardware servers). Examples of server instances **114** include, but are not limited to a web server instance (e.g., a unitary Apache installation), an application server instance (e.g., unitary Java® Virtual Machine), and/or a database server instance, e.g., a unitary MySQL® catalog (MySQL® is a registered trademark owned by MySQL AB A COMPANY).

To utilize computing resources within the developmental platform network **110,** network operators may choose to configure the data centers **112** using a variety of computing infrastructures. In one embodiment, one or more of the data centers **112** are configured using a multi-tenant cloud architecture, such that a single server instance **114,** which can also be referred to as an application instance, handles requests and serves multiple customers. In other words, data centers with multi-tenant cloud architecture commingle and store data from multiple customers, where multiple customer instances are assigned to a single server instance **114.** In a multi-tenant cloud architecture, the single server instance **114** distinguishes between and segregates data and other information of the various customers. For example, a multi-tenant cloud architecture could assign a particular identifier for each customer in order to identify and segregate the data from each customer. Generally, implementing a multi-tenant cloud architecture may suffer from various drawbacks, such as a failure to single server instance **114** causing outages for all customers allocated to the single server instance **114.**

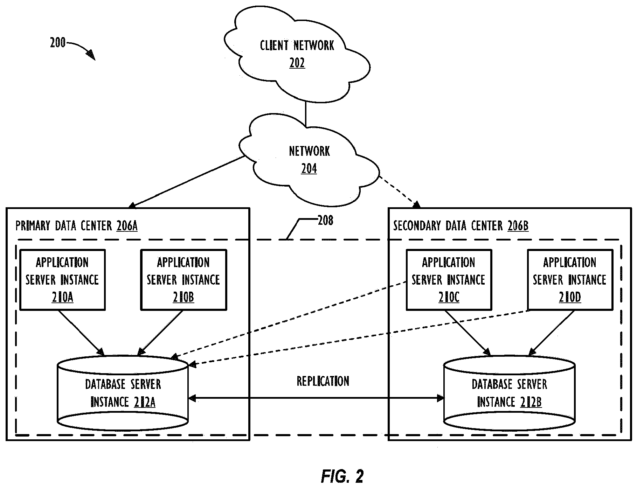

In another embodiment, one or more of the data centers **112** are configured using a multi-instance cloud architecture to provide every customer its own unique customer instance. For example, a multi-instance cloud architecture could provide each customer instance with its own dedicated application server and dedicated database server. In other examples, the multi-instance cloud architecture could deploy a single server instance **114** and/or other combinations of server instances **114,** such as one or more dedicated web server instances, one or more dedicated application server instances, and one or more database server instances, for each customer instance. In a multi-instance cloud architecture, multiple customer instances could be installed on a single physical hardware server, where each customer instance is allocated certain portions of the physical server resources, such as computing memory, storage, and processing power. By doing so, each customer instance has its own unique software stack that provides the benefit of data isolation, relatively less downtime for customers to access the developmental platform network **110,** and customerdriven upgrade schedules. An example of implementing a customer instance within a multi-instance cloud architecture will be discussed in more detail below with reference to FIG. **2****.**

In one embodiment, a customer instance may include one or more additional database tables for storing information describing one or more enterprise alerts and the various categories, values, and relative priorities of such alerts. The CMDB system may also include one or more database listeners that can listen for changes (e.g., additions, deletions, updates, etc.) to various tables on client instances and update one or more additional database tables, also referred to herein as "trigger queues," based on any relevant changes that have taken place with respect to the various CIs in a system that may necessitate a recalculation of the priority score of one or more enterprise alerts stored in the system. After characterizing, scoring, and prioritizing the alerts open in the system, a list-like structure (e.g., a sorted list consisting of one or more alerts and their relevant metadata) may be generated to allow a user to visualize the importance, historical record, and other relevant information for each such alert-including potential troubleshooting or notification options.

FIG. **2** is a schematic diagram of an embodiment of a multi-instance cloud architecture **200** where embodiments of the present disclosure may operate. FIG. **2** illustrates that the multi-instance cloud architecture **200** includes a client network **202** that connects to two data centers **206a** and **206b** via network **204.** Client network **202** and network **204** may be substantially similar to client network **102** and network **108** as described in FIG. **1****,** respectively. Data centers **206a** and **206b** can correspond to FIG. **1**'s data centers **112** located within developmental platform network **110.** Using FIG. **2** as an example, a client instance **208** is composed of four dedicated application server instances **210a-210d** and two dedicated database server instances **212a** and **212b.** Stated another way, the application server instances **210a-210d** and database server instances **212a** and **212b** are not shared with other client instances **208.** Other embodiments of the multi-instance cloud architecture **200** could include other types of dedicated server instances, such as a web server instance. For example, the client instance **208** could include the four dedicated application server instances **210a-210d,** two dedicated database server instances **212a** and **212b,** and four dedicated web server instances (not shown in FIG. **2**)**.**

To facilitate higher availability of the client instance **208,** the application server instances **210a-210d** and database server instances **212a** and **212b** are allocated to two different data centers **206a** and **206b,** where one of the data centers **206** acts as a backup data center. In reference to **FIG. 2****,** data center **206a** acts as a primary data center **206a** that includes a primary pair of application server instances **210a** and **210b** and the primary database server instance **212a** for the client instance **208,** and data center **206b** acts as a secondary data center **206b** to back up the primary data center **206a** for a client instance **208.** To back up the primary data center **206a** for the client instance **208,** the secondary data center **206** includes a secondary pair of application server instances **210c** and **210d** and a secondary database server instance **212b.** The primary database server instance **212a** is able to replicate data to the secondary database server instance **212b.**

As shown in FIG. **2****,** the primary database server instance **212a** may replicate data to the secondary database server instance **212b** using, e.g., a Master-Master MySQL Binlog replication operation. The replication of data between data could be implemented by performing full backups weekly and daily incremental backups in both data centers **206a** and **206b.** Having both a primary data center **206a** and secondary data center **206b** allows data traffic that typically travels to the primary data center **206a** for the client instance **208** to be diverted to the second data center **206b** during a failure and/or maintenance scenario. Using FIG. **2** as an example, if the application server instances **210a** and **210b** and/or primary data server instance **212a** fails and/or is under maintenance, data traffic for client instances **208** can be diverted to the secondary application server instances **210c** and the secondary database server instance **212b** for processing.

Although FIGS. **1** and **2** illustrate specific embodiments of a cloud computing system **100** and a multi-instance cloud architecture **200,** respectively, the disclosure is not limited to the specific embodiments illustrated in FIGS. **1** and **2****.** For instance, although FIG. **1** illustrates that the developmental platform network **110** is implemented using data centers, other embodiments of the of the developmental platform network **110** are not limited to data centers and can utilize other types of remote network infrastructures. Moreover, other embodiments of the present disclosure may combine one or more different server instance into a single server instance. Using FIG. **2** as an example, the application server instances **210** and database server instances **212** may be combined into a single server instance. The use and discussion of FIGS. **1** and **2** are only examples to facilitate ease of description and explanation and are not intended to limit the disclosure to the specific examples illustrated therein.

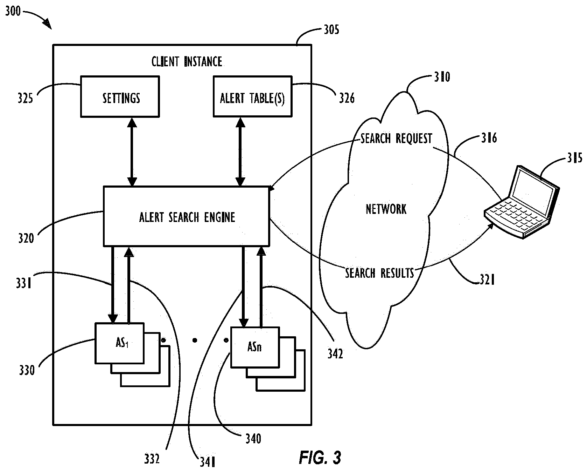

FIG. **3** illustrates a block diagram **300** of an embodiment of a network environment and hosted client instance **305** that may be used to support an improved CMDB alert display and prioritization system, according to one or more disclosed embodiments. As illustrated in FIG. **3****,** network **310** is a further example of a network such as the Internet or one or more corporate networks such as network **108** of FIG. **1** and network **204** of FIG. **2****.** In this example, network **310** may represent a single network or a combination of networks that may be configured to transmit a search request **316** from a client device **315** to an alert search engine **320** and return search results **321** from search engine **320** to client device **315.**

Client device **315** may be configured to communicate through network **310** with client instance **305** that may be hosted on a remote server or a remote server instance in a cloud infrastructure, as described above. In this example, client device **315** may be configured to execute a web browser interface and receive a user indication of a search request **316** to be transmitted to client instance **305** and search engine **320** within that client instance **305** for processing. Search engine **320** may receive search request **316** and obtain informational settings **325** from within client instance **305** pertaining to the processing of search request **316.** Alternatively, settings may be embedded within search request **316** without the need to reference settings **325.**

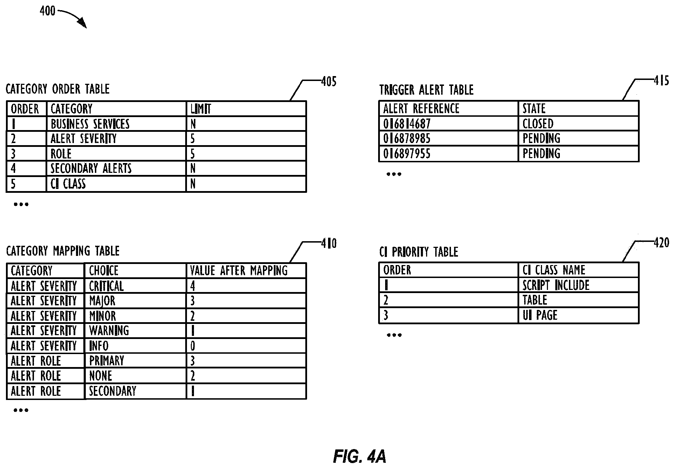

Once search engine **320** has obtained a sufficient amount of information pertaining to search request **316,** the search process may be initiated to and from the various relevant tables storing alerts and alert metadata information **(326),** identifying the appropriate alert set results **(330, 340)** based on the respective search queries, as shown by interface lines **331, 341.** As will be discussed in further detail with reference to FIG. **4A****,** in some embodiments, these relevant tables may be specifically configured to capture information regarding the categories, order, and value mappings of the various alert items. The search request **316** may, e.g., comprise the name of a particular alert, a partial name of a alert, an identification number of an alert, a type of CI related to an alert, one more desired characteristics of an alert, a vendor name, a machine or server name, a severity level of an alert, a priority level of an alert, a state of an alert, a date range, a physical location, etc., as well as a minimum or maximum number of alerts returned by the search request that the user wishes to pull back information for. Essentially, any piece of metadata regarding an alert (or related CI) that the system has captured information for may be searched on by the user that is sending search request **316.**

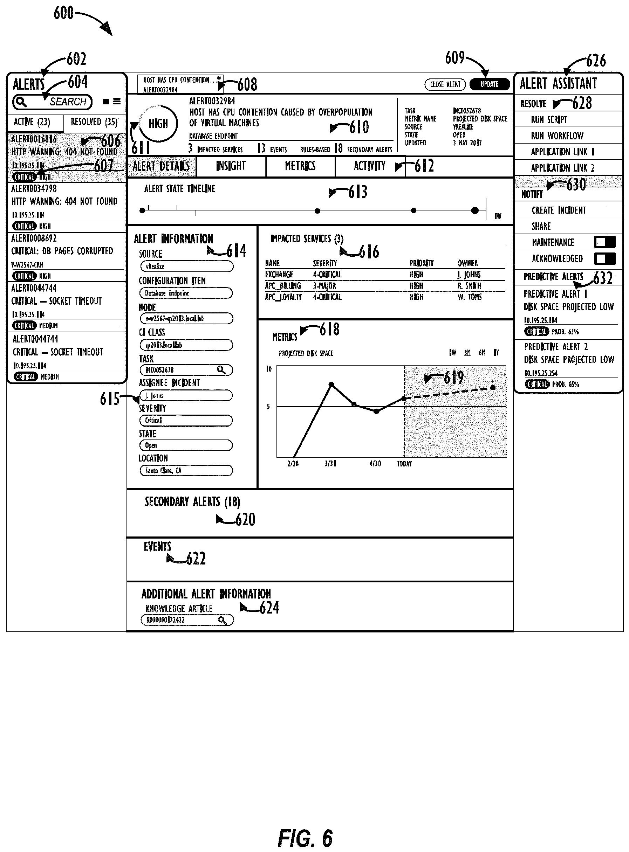

Each search request **316** may return a group of one or more alerts matching the search criteria from the aforementioned various relevant tables storing alert and related alert metadata information. For example, a first search request may return a group of alert objects, "Alert Set 1" (AS₁) **330,** as shown by interface line **332,** which will contain all the relevant alert items and related metadata necessary for the client instance **305** to generate a sorted list (or other desired data structure) allowing the user to view and/or traverse the results of the search request, as will be described in greater detail with reference to FIGS. **6-7****.** Likewise, additional search requests may be handled by search engine **320,** returning different search results (e.g., partially overlapping search results with other search queries or search results that do not share overlapping results with other search queries), as represented in FIG. 3 by "AS group n" (ASₙ) **340,** and as shown by interface line **342.** Again, each returned AS group will contain all the relevant alert information and related metadata necessary for the for the client instance **305** to generate a sorted list data structure (or other desired data structure) for the respective search query, e.g., to be displayed on client device **315.**

Block diagram **300** illustrates an example of a portion of a service provider cloud infrastructure (e.g., network **110** of FIG. **1**) connected via a network **310,** such as the Internet, to a customer device **315** to provide a user interface to network applications, executing within a client instance **305,** via a web browser, as an example. Network **310** is a further example of a network such as network **108** of FIG. **1** and network **204** of FIG. **2****.** Details of these networks are discussed above with reference to each of FIGS. **1** and **2** and are not discussed further here. Service provider cloud infrastructure client instance **305** illustrates cloud resources and server instances similar to those explained with respect to FIG. **2****,** but is illustrated here to show support for an alert search capability within a single client instance **305.** Of course, cloud provider infrastructure may be configured to support a plurality of end-user devices, such as end-user device **315,** concurrently, wherein each end-user device is in communication with the single client instance **305.** Also, cloud provider infrastructures may be configured to support any number of client instances, such as client instance **305,** concurrently, with each of the instances in communication with one or more end-user devices. As mentioned above, an end-user may also interface with client instance **305** using an application that is executed within a web browser.

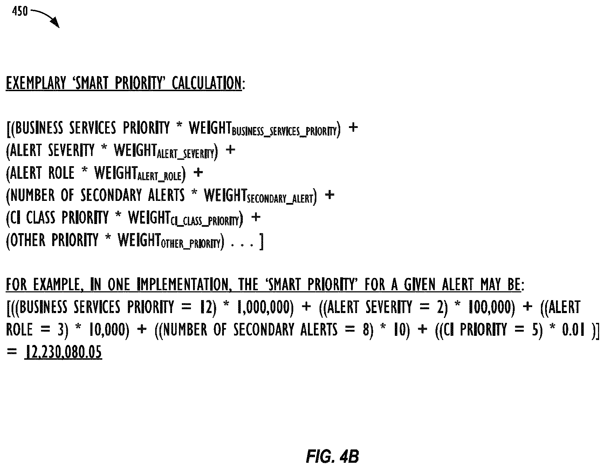

Referring now to FIG. **4A****,** a simplified diagram **400** of various database tables is shown, according to one or more embodiments of the present disclosure. The various database tables illustrated in FIG. **4A** may be utilized to implement the smart prioritization system described herein. First, a category order table **(405)** may be employed, which may have at least the following fields: order, category, and limit. The order field may relate to the relevant importance of each of the various categories with respect to calculating the priority level of a given alert. For example, an order value of '1' may be the most important category, whereas as an order value of '5' may be an alert category that is less important to the alert's overall priority level. The categories may include, e.g., a business services criticality level, an alert severity level, a role, a number of secondary alerts, and/or a CI class. Of course, the categories and corresponding orders shown in table **405** are merely exemplary, and may vary from implementation to implementation, based on the needs of a given system. The limit column may store a maximum number of values for a given category (if there is such a maximum). A value of 'N' (or other predefined value) may be used in this field for a category with an unlimited number of potential values. According to some embodiments, the order column and the limit column may be utilized, in combination, to determine the weight value for a given category in a given implementation, as will be discussed in further detail below with respect to FIG. **4B****.** Values in each of the order column, category column, and/or limit column may each be changed by an authorized user of the system, as desired. Further, new rows may be added to the category order table as new categories for alerts become tracked by the system or relevant to the calculation of an alert's priority score.

A category mapping table **(410)** may also be employed, which may have at least the following fields: category, choice, and value (after mapping). As described above, the category field may correspond to the various categories as defined in category order table **(405).** For example, as shown in FIG. **4B****,** the category 'alert severity' may have the possible choices of: 'critical' (which maps to a value of '4'); 'major' (which maps to a value of '3'); 'minor' (which maps to a value of '2'); 'warning' (which maps to a value of '1'); and 'info' (which maps to a value of '0'). Likewise, the category 'alert role' may have the possible choices of: 'primary' (which maps to a value of '3'); 'none' (which maps to a value of '2'); 'minor' (which maps to a value of '2'); and 'secondary' (which maps to a value of '1'). Of course, the choices available for each category and corresponding values after mapping shown in table **4105** are merely exemplary, and may vary from implementation to implementation, based on the needs of a given system. Further, new rows may be added to the category mapping table as new categories choices become tracked by the system or relevant to the calculation of an alert's priority score.

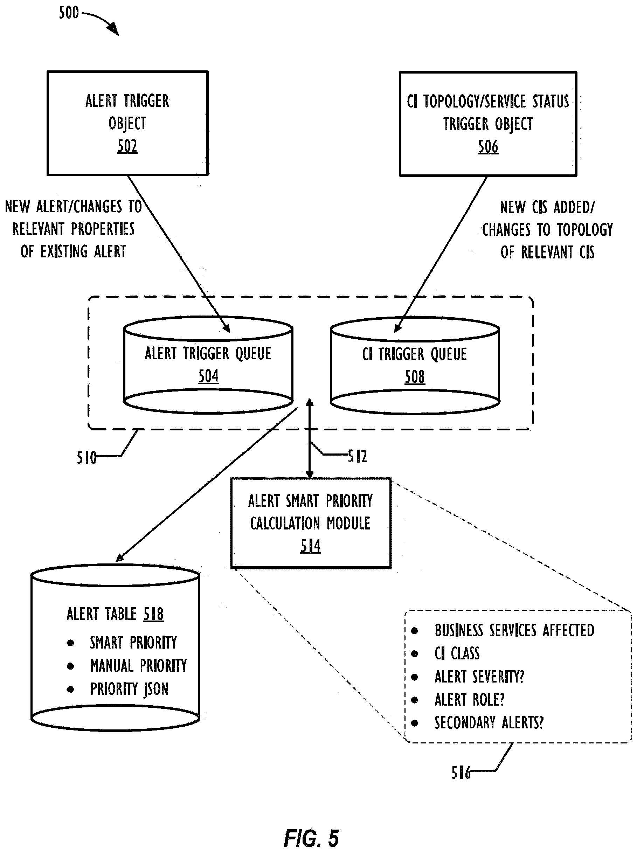

A trigger alert table **(415)** may also be employed, which may have at least the following fields: alert reference and state. The trigger alert table, which will be discussed in further detail below with reference to FIG. **5****,** may be used to collect and store the unique identifiers of all alerts (e.g., via the alert reference field) of all alerts for which some event has triggered the system to determine that a recalculation of a particular alert's priority score is needed (e.g., the addition of a new alert, a severity change of an existing alert, a role change of an existing alert, a change in the identity or type of a CI associated with a given alert, a change in the topology of CIs stored in the system, etc. The state column may include values such as, open (or pending), closed (or resolved), in process, etc., so that the status of a given alert may be taken into account when deciding if further processing and/or recalculation of the given alert's priority score is necessary. For example, if a given alert is in the "closed" state, there may be no need to continue to update its priority score (or the priority score of any of its 'child' alerts) any longer.

Finally, a CI Priority table **(420)** may also be employed, which may have at least the following fields: order and CI class name. The CI Priority table **(420)** may be used to support one or more various alert categories, such as the "CI class" category described above. As with the category order table **(405),** the order field may relate to the relevant importance of each of the various CI types with respect to calculating the priority level of a given alert associated with such CIs. For example, an alert relating to a 'script include' CI may be given a lower order (and thus higher priority) than an alert associated only with a User Interface (UI) page type of CI. As with the other tables mentioned with respect to FIG. **4A****,** the various values in the CI Priority table **(420)** may also be customized by users based on the needs of a given implementation.

Referring now to FIG. **4B****,** an exemplary alert smart priority calculation **450** is shown, according to one or more embodiments of the present disclosure. In the example of FIG. **4B****,** the five categories used in the 'smart priority' calculation are: 'business services priority,' 'alert severity,' 'alert role,' 'number of secondary alerts,' and 'CI class priority.' Each category also has a corresponding weight value which may, as described above, be based upon a combination of the respective categories 'order' value and 'limit' value in the category order table **(405).** Assuming that the weight of the 'business services priority' class is 1,000,000 and the alert's value for this category is 12, the weight of the 'alert severity' class is 100,000 and the alert's value for this category is 2, the weight of the 'alert role' class is 10,000 and the alert's value for this category is 3, the weight of the 'number of secondary alerts' class is 10 and the alert's value for this category is 8, and the weight of the 'CI class priority' class is .01 and the alert's value for this category is 5, then the final 'smart priority' value for the alert would be 12,230,080.05. As may now be understood, because 'business services priority' is weighted as the most important category in this exemplary smart priority calculation, the exemplary alert for which the calculation is shown in FIG. **4B** would be ranked above any other alert that had a value of 11 or lower in the 'business services priority' category, regardless of what values such other alert may have in the other, lower-ranked, categories. According to some embodiments, the weights for each of the alert categories may comprise a numerical value that is a factor of ten. In this way, the value for each categories may be separated out into its own 'digit' place in the final calculated smart priority score, thus making the ranking and sorting operations more simple.

According to some embodiments, the calculation behind the smart priority score for a given alert may be stored in a metadata field along with the rest of the alert record, e.g., in the form of a JavaScript Object Notation (JSON) representation. It should be noted that it is not necessary to reveal the actual calculated smart priority value to the user of the system, although that is possible, if so desired. Rather, the smart priority value may simply be used to sort or rank the alert records returned to a user's console. As mentioned above, in some embodiments, the smart priority score may simply be used to group the various alert items into 'buckets' displayed on the user interface, e.g., based on the relative criticality of the alerts in each respective group, such as "High," "Medium," and "Low." In this way, a user may prioritize his or her time to review or trouble shoot the "High" priority alert items first.

Referring now to FIG. **5****,** various components of a system **500** for calculating smart priorities for alert records are shown, according to one or more embodiments of the present disclosure. As mentioned above, according to some embodiments, a CMDB may comprise an alert trigger queue **(504)** for storing alert trigger objects **(502)** and a CI trigger queue **(508)** for storing objects reflecting changes in the topology or status of CIs stored in the CMDB **(506).** Alert trigger objects **(502)** may, e.g., comprise new alerts being added to the system, changes or updates to relevant properties of existing alerts (e.g., severity, role, number of secondary alerts etc.), and/or changes or updates to CIs related to an existing alert (e.g., parent CIs and/or child CIs). CI topology/service status objects **(506)** may, e.g., comprise and CIs newly added to the CMDB or changes to the topology of existing CIs in the system. The various trigger queues **(510)** may periodically be crawled by a process job (e.g., at a predetermined time interval or in response to a particular event) to obtain and open all pending (e.g., open) alert records that need to be processed, i.e., via the calculation of an updated priority score, based on the triggers currently stored in either trigger queue **(510).**

For each obtained alert record needing a priority recalculation, an alert smart priority calculation module **(514)** may be used to recalculate the smart priority score for each such alert, e.g., according to a smart priority calculation method, such as those described above with reference to FIGS. **4-5****.** As mentioned above, various categories **(516)** may go into the calculation of the smart priority score, and the various categories may each be weighted independently of each other in the calculation of the final smart priority value for each given alert. According to some embodiments, the alert smart priority calculation module **(514)** may proceed by, for each alert, building a set of all the CIs (e.g., business services) impacted by the respective alert and its secondary alerts, then determining the business criticality of each such impacted services. Next, the relevant weights for each relevant alert category may be pulled or determined from the category order table **(405).** Next, the information relevant to each category may be located (e.g., the alert severity, alert role, number of secondary alerts, CI class priority, etc.) so that the updated smart priority value for the alert may be calculated, as described above. Finally, the priority value of the processed alerts may be updated, e.g., via batch update operation.

The alert prioritization schemes described herein may also necessitate one or more changes to existing table schema, such as the inclusion of additional fields in an alert table **(518).** For example, the alert table **(518)** may be modified to include a new column for the aforementioned smart priority score value that is calculated for each alert. The alert table **(518)** may also be modified to include a 'manual priority' column (e.g., in the form of a Boolean value) to allow for system to track whether the user has overridden the calculated smart priority value for a given alert and instead entered a manual priority for the alert (and/or 'dragged' the alert into a different category via the user interface). In some embodiments, the value of the smart priority calculated by the system prior to the user's manual modification may also be tracked by the alert table **(518),** e.g., in the event that the user wishes to return the alert to its priority value from prior to the manual manipulation by the user. Finally, as described above, the alert table **(518)** may also store a column for the string representation of the priority calculation itself, e.g., in the form of a structured JSON object, so that subsequent changes to the values of one or more of an alert's category values may be processed more readily and/or so that not all categories going into the smart priority score have to be recalculated any time that a single category value for the alert changes.

Referring now to FIG. **6****,** an exemplary user interface page **600** for viewing information related to alert records is shown, according to one or more embodiments of the present disclosure. As may be understood, FIG. **6** provides merely one exemplary user interface, and different user interfaces, including user-customizable user interfaces, may be employed based on the needs or desires of a given implementation.

Exemplary user interface page **600** is shown as divided into three columns. In the left column of user interface page **600** is an alert panel **602.** Alert panel **602** may be used to provide a quick overview **(606)** of a subset of the alerts stored in the system. For example, alert panel **602** may show only those alerts that were returned from the last alert query executed by the user, e.g., via search box functionality **604.** The alert panel **602** may also be filtered by various alert properties, e.g., CI type, alert severity, source, services impacted, etc. Alternately, alert panel **602** may show the most recent 'n' alerts, the most critical 'n' alerts, the most repeated 'n' alerts, etc. In some embodiments, the smart priority value may be converted into a simple criticality ranking **(607),** such a "High," "Medium," or "Low." In this way, users may easily tell at a glance which alerts are the most critical for them to respond to, even without needing to know the precise smart priority calculation (or smart priority score value) that went into determining the criticality ranking of the alert. The alerts in alert panel **602** may also be filtered by other factors, such as: only active alerts, only resolved alerts, only alerts that are 'in process' of being resolved, etc.

In the central column of user interface page **600** is a detailed alert information pane **610.** The detailed alert information pane **610** may support a tabbed interface **(608),** allowing the user to easily switch between viewing the detailed information of one or more open alert items. As shown in FIG. 6, the detailed alert information pane **610** may present various alert-related information items to the user, including: a visual indication of the alert's criticality **(611);** the system identifier number of the alert; the type of CI associated with the alert (e.g., a "database endpoint"); the number of impacted services, events, and/or secondary alerts associated with the alert; the task name associated with the alert; the metric name(s) being tracked with respect to the alert (e.g., projected disk space); the source of the alert; the current state of the alert (e.g., open, pending, closed, etc.); and the date and/or time of the last time the alert record was updated.

Alert information pane **610** may also comprise additional tabs **(612)** for displaying further detailed information about the alert, insights about the alert (e.g., its causes, potential solutions), metrics about the alert, and/or alert activity over time. An alert information panel (614) may, e.g., provide the various categories **(615)** of information discussed above (or others), such as: the source of an alert; the type, name, or class of CI associated with the alert; the task associated with the alert; the individual assigned to the alert; the severity of the alert; the current state of the alert; and/or the location of the alert. According to some embodiments, the user may be able to modify or override the data in one or more of the fields shown in alert information panel **(614),** assuming they have sufficient authority. For example, a user may wish to assign a different individual to an incident, modify the state of an alert (e.g., if it has been resolved), etc.

Alert information pane **610** may also comprise a listing of the business services impacted by the currently-selected alert **(616),** for example, in tabular form. The display may also include the name, severity, priority, and owner/assignee of such impacted services, so that the user may determine whether or not it is necessary to contact the owner/assignee of such impacted services, e.g., to warn them of potential adverse effects to their services, as well as links to such impacted services, e.g., to view a service map and/or drill down to get more data related to a particular impacted service.

Alert information pane **610** may also comprise a metrics sub-pane **(618),** which may, e.g., display one or more metrics tracked by the system relevant to the currently-selected alert, including links thereto. This metric may comprise, e.g., a projected amount of disk space remaining on a particular node in the enterprise system. This information may also be converted into a graphical display for convenience and ease of use, e.g., a line graph (619) or bar chart, so that a user may track the value of a given metric over time and perhaps identify or discover new trends in such metric, anticipate when such metric may be likely to exceed an acceptable operational threshold, or prevent the metric from exceeding the acceptable operational threshold altogether.

Alert information pane **610** may also comprise various other detailed sub-panels, e.g., related to secondary alerts **(620),** events **(622),** or whatever other relevant information may be tracked for an alert in a given enterprise implementation. Finally, there may also be a detailed sub-panel dedicated to additional alert information **(624),** such as knowledge articles with information regarding the currently-selected alert, potential troubleshooting solutions, financial aspects of the currently-selected alert (if applicable), correlated alerts, and/or a place for a user to provide feedback regarding the currently-selected alert, etc. When a user is done examining the additional alert information on a given alert, he or she may simply click the button to close the alert or update the alert **(609),** with whatever changes or modifications the user may have made to the alert's metadata.

In the right column of user interface page **600** is an alert assistant pane **626.** The alert assistant pane **626** may comprise links to one or more possible resolution methods **(628),** such as scripts or workflows that may be run by the system to attempt to diagnose or correct the system error condition that is generating the currently-selected alert. The resolution methods **(628)** may also include links to one or more applications that may provide further information or assistance to the user in handling the alert. In some embodiments, the system may provide one or more 'out-of-the-box' workflows for common tasks, which workflows may be dynamically adjusted, e.g., based on machine learning over time-or even applied automatically by the system in an effort to 'heal' itself without requiring user intervention at all.

The alert assistant pane **626** may also comprise links to one or more alert notification methods **(630),** such as creating an incident report for the alert, sharing the alert with one or more other users of the system (e.g., via a chat or "war room"-type interface), indicating that a given CI needs maintenance to be performed on it, and/or acknowledging the alert.

In some embodiments, the alert assistant pane **626** may also comprise a sub-panel for displaying one or more "predictive" alerts **(632).** Predictive alerts may comprise alerts for which the triggering condition has not yet occurred but where, e.g., based on an analysis of historical activity and/or a prediction of likely future activity, the application of machine learning or other artificial intelligence techniques, and/or the analysis of metric trends over time, the system has determined with some level of confidence or probability that a given alert may soon be triggered. For example, if there are 10 gigabytes of disk space remaining on a given node, and the disk space has been decreasing at the rate of 1 gigabyte an hour, the system may be able to issue a predictive alert that there will be a disk space projected low alert at some point in the next 10 hours for the given node. The use of predictive alerts may, in fact, allow users of the system to identify, triage, report, assign and/or troubleshoot certain system conditions before they even raise to the level of being a system alert. In other embodiments, the contents of alert assistant pane **626** itself may be auto-adjusted or populated based on the use of machine learning techniques, e.g., based on the most successful methods of resolving or notifying a given type of alert in the past.

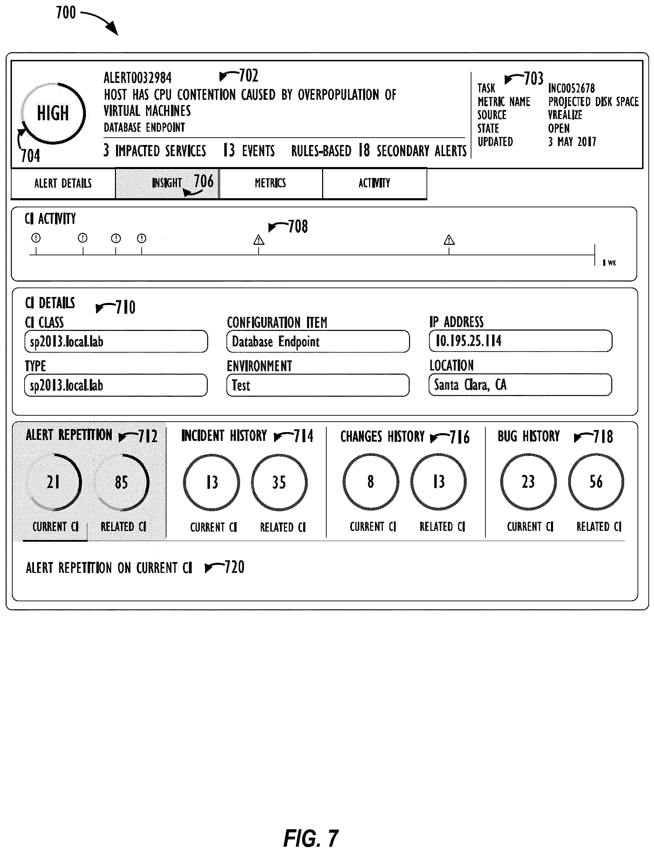

Referring now to FIG. **7****,** another exemplary user interface page **700** for viewing information related to alert records is shown, according to one or more embodiments of the present disclosure. User interface page **700** may, e.g., represent the detailed alert information pane **610** from the center column of user interface page **600** discussed above with reference to FIG. **6** after the user has selected the "Insight" tab **706** from among additional tabs **(612).** Exemplary user interface page **700** may comprise the same alert metadata information **(702/703)** as was discussed for the currently-selected alert in reference to FIG. **6** above, including a visual indication of the alert's criticality **(704).** The additional insight information from the currently-selected alert information may comprise: a timeline of CI activity **(708),** e.g., showing a visual record of repeated incidents, alerts, changes, logged bugs, etc., with respect to the CI associated with the currently-selected alert over some time period, e.g., a day, week, month, or year.

Exemplary user interface page **700** may further comprise a sub-pane for CI details **(710),** such as the CI's class, type, name, IP address, location, and/or the name of the environment in which the CI is connected. Exemplary user interface page **700** may further comprise one or more additional sub-panes related to: alert repetition **(712);** incident history **(714);** changes history **(716);** and/or logged bug history **(718).** According to some embodiments, each of these further sub-panes may be able to be further broken down into statistics relevant to the current CI, i.e., associated with the currently-selected alert or to all related CIs. Related CIs may comprise, e.g., parent CIs (e.g., within a Level-1 or Level-2 relationship of selected CI), child CIs (e.g., within a Level-1 or Level-2 relationship of selected CI), CIs of a similar type, CIs performing the same service, CIs at a similar location, or CIs in a similar environment, etc. This type of information may provide further insight to the user as to whether a current alert is unique to a particular CI or is endemic to all CIs of that type (and, thus, likely to be an alert that is soon to be triggered on one or more additional related CIs in the future). Additional information related to a specific selected sub-pane may be displayed in sub-pane **720,** e.g., information on the number of times a given alert has been repeated for the current CI (or related CIs) over a given time period.

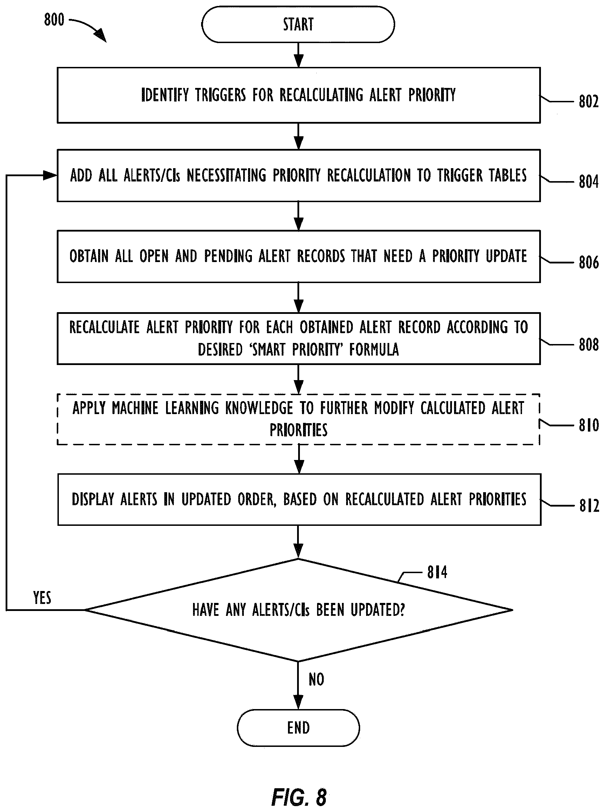

Referring now to FIG. **8****,** a flowchart **800** of an embodiment of a method that calculates smart priorities for alert records is shown. Method **800** starts, at Step **802,** by identifying the system triggers that will be tracked and used to trigger the recalculation of the alert priority of alerts in the system. Next, once the types of system triggers have been identified, at Step **804,** the alerts and/or CIs that should be triggered may be added to their respective queues. Special care may be taken with regard to tracking an alert's state (e.g., there may be a new trigger for an alert that is already in an 'in progress' state that still needs to be added to the alert trigger queue, while alerts that are 'closed' need not be added to the alert queue). At Step **806,** the method may execute a process job to obtain all the open and pending alert records that have been identified as needing an alert priority value recalculation, e.g., based on receiving one or more related triggers. Next, at Step **808,** the method may recalculate the alert priority value for each obtained alert, e.g., according to a desired 'smart priority' formula, such as the various smart priority formulae described above with reference to FIGS. **4-5****.** Next, at Step **810,** the method may optionally apply one or more machine learning techniques to further modify the calculated alert priority values. For example, the calculated 'smart priority' score for a given alert may be further modified (or replaced altogether) via the application of supervised or semi-supervised machine learning techniques, based on historical user activity data, mean time to resolution, or feedback for the CMDB (or from across multiple CMDB customers over time). Such techniques may involve, e.g., the use of neural networks with feedback. Machine learning techniques may be employed on a per-organization, per sub-organization, or global basis. Finally, at Step **812,** the alerts may be displayed via a user interface, e.g., such as the user interfaces described above with reference to FIGS. 6-7, in an updated order, based on the recalculated alert priorities.

If, after the passage of some predetermined amount of time (or upon determination that new items have been added to either trigger queue **(510),** it is determined that additional alerts and/or CIs have been updated (i.e., 'Y' at Step **814**)**,** the method may return to Step **804** to begin the processing of the new triggers and the recalculation of the priority values of the relevant alert records. If, instead, however, it is determined that no new items have been added to either trigger queue **(510),** or that alert reprioritization calculations are no longer desired (i.e., 'N' at Step **814),** the method may end. Of course, as long as the system is continuing to monitor and re-prioritize alerts, the method **800** will effectively need to be run continuously so that alert and/or CI triggers may be processed in real-time (or with no greater than a maximum permissible lag time).

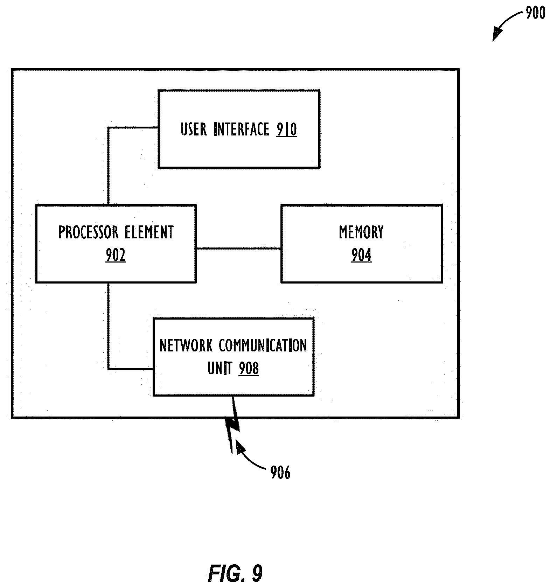

Referring now to FIG. **9****,** a block diagram illustrates a computing device **900** that may be used for implementing one or more of the techniques described herein. For example, the computing device **900** illustrated in FIG. **9** could represent a client device or a physical server device. As shown in FIG. **9****,** the computing device **900** can include can also include one or more input/output devices, such as a network communication unit **908** that could include a wired communication component and/or a wireless communications component **906,** which can be coupled to processor element **902.** The network communication unit **908** can utilize any of a variety of standardized network protocols, such as Ethernet, TCP/IP, to name a few of many protocols, to effect communications between devices and comprise one or more transceiver(s) that utilize the Ethernet, power line communication (PLC), WiFi®, and/or other communication methods.

The computing system **900** includes a processing element **902** that contains one or more hardware processors, where each hardware processor may have a single or multiple processor cores. In one embodiment, the processing element **902** may include at least one shared cache that stores data (e.g., computing instructions) that are utilized by one or more other components of processing element **902.** For example, the shared cache may be locally cached data stored in a memory for faster access by components of the processing elements **902.** In one or more embodiments, the shared cache may include one or more mid-level caches, such as level 2 (L2), level 3 (L3), level 4 (L4), or other levels of cache, a last level cache (LLC), or combinations thereof. Examples of processors include, but are not limited to a central processing unit (CPU) such as a microprocessor. Although not illustrated in FIG. **9****,** the processing element **902** may also include one or more other types of hardware processing components, such as graphics processing units (GPU), application specific integrated circuits (ASICs), field-programmable gate arrays (FPGAs), and/or digital signal processors (DSPs).

FIG. **9** illustrates that memory **904** may be operatively coupled to processing element **902.** Memory **904** may be a non-transitory medium configured to store various types of data. For example, memory **904** may include one or more memory devices that comprise a non-volatile storage device and/or volatile memory. Volatile memory, such as random access memory (RAM), can be any suitable non-permanent storage device. The non-volatile storage devices can include one or more disk drives, optical drives, solid-state drives (SSDs), tap drives, flash memory, read only memory (ROM), and/or any other type memory designed to maintain data for a duration time after a power loss or shut down operation. In certain instances, the non-volatile storage device may be used to store overflow data if allocated RAM is not large enough to hold all working data. The non-volatile storage device may also be used to store programs that are loaded into the RAM when such programs are selected for execution.

Persons of ordinary skill in the art are aware that software programs may be developed, encoded, and compiled in a variety computing languages for a variety software platforms and/or operating systems and subsequently loaded and executed by processing element **902.** In one embodiment, the compiling process of the software program may transform program code written in a programming language to another computer language such that the processing element **902** is able to execute the programming code. For example, the compiling process of the software program may generate an executable program that provides encoded instructions (e.g., machine code instructions) for processor **902** to accomplish specific, non-generic, particular computing functions.

After the compiling process, the encoded instructions may then be loaded as computer executable instructions or process steps to processing element **902** from storage (e.g., memory **904**) and/or embedded within the processing element **902** (e.g., cache). Processing element **902** can execute the stored instructions or process steps in order to perform instructions or process steps to transform the computing device into a non-generic, particular, specially programmed machine or apparatus. Stored data, e.g., data stored by a storage device, can be accessed by processing element **902** during the execution of computer executable instructions or process steps to instruct one or more components within the computing device **900.**

A user interface 910 can include a display, positional input device (such as a mouse, touchpad, touchscreen, or the like), keyboard, or other forms of user input and output devices. The user interface 910 can be coupled to processor element 902. Other output devices that permit a user to program or otherwise use the computing device can be provided in addition to, or as an alternative to, network communication unit 908. When the output device is (or includes) a display, the display can be implemented in various ways, including by a liquid crystal display (LCD), a cathode-ray tube (CRT), or a light emitting diode (LED) display, such as an organic LED (OLED) display. Persons of ordinary skill in the art are aware that the computing device 900 may comprise other components well known in the art, such as sensors, powers sources, and/or analog-to-digital converters, not explicitly shown in FIG. 9. For ease of discussion, FIG. 9 does not include further explanation of these other components well known in the art.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations may be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.).

Use of the term "optionally" with respect to any element of a claim means that the element is required, or alternatively, the element is not required, both alternatives being within the scope of the claim. Use of broader terms such as comprises, includes, and having may be understood to provide support for narrower terms such as consisting of, consisting essentially of, and comprised substantially of. Accordingly, the scope of protection is not limited by the description set out above but is defined by the claims that follow.

It is to be understood that the above description is intended to be illustrative, and not restrictive. For example, the above-described embodiments may be used in combination with each other. Many other embodiments will be apparent to those of skill in the art upon reviewing the above description. The scope of the invention therefore should be determined with reference to the appended claims. It should be noted that the discussion of any reference is not an admission that it is prior art to the present invention, especially any reference that may have a publication date after the priority date of this application.

## Claims

1. A system, comprising:
a non-transitory memory; and
one or more hardware processors configured to read instructions from the non-transitory memory to cause the system to:
for each alert item of a plurality of alert items, which are related to configuration items, CIs, stored in a configuration management database, CMDB, wherein a configuration item, CI, refers to a record for any component in an enterprise network:
obtain a score value for each of a plurality of categories, wherein each score value relates to a characteristic or degree of a corresponding category for the respective alert item;
obtain a weight value corresponding to each of the plurality of categories, wherein each weight value relates to an importance or criticality of the corresponding category; and
calculate a priority score for the respective alert item by adding together products of each score value for the respective alert item and its corresponding weight value; and
display the plurality of alert items on a user interface, wherein the plurality of alert items are sorted based on their respective priority scores.

2. The system of claim 1, wherein at least one of the plurality of categories comprises:
a number of services affected by the respective alert item; a severity level of the respective alert item; a role of the respective alert item; a number of secondary alert items for the respective alert item; or a class of Configuration Items, CIs, associated with the respective alert item.

3. The system of claim 1, wherein the instructions to cause the system to display the plurality of alert items on the user interface further comprise instructions to:
group the plurality of alert items into one or more groups based on the respective priority scores of the plurality of alert items.

4. The system of claim 1, wherein the instructions to cause the system to calculate the priority score for the respective alert item of the plurality of alert items further comprise instructions to:
apply one or more supervised or semi-supervised machine learning techniques to historical user activity data for the system.

5. The system of claim 1, wherein the instructions to cause the system to calculate the priority score for the respective alert item of the plurality of alert items further comprise instructions to:
recalculate the priority score for the respective alert item upon an occurrence of one or more triggers.

6. A non-transitory program storage device, readable by one or more programmable control devices and comprising instructions stored thereon, which, when executed by said one or more programmable control devices, cause said one or more programmable control devices to:
receive a plurality of alerts related to configuration items, CIs, stored in a configuration management database, CMDB, wherein a configuration item, CI, refers to a record for any component in an enterprise network;
obtain a score value for the each of the plurality of alerts in each of a plurality of alert categories, wherein each score value relates to a characteristic or degree of a corresponding alert category for the respective alert of the plurality of alerts;
obtain a weight value corresponding to each of the plurality of alert categories for each of the plurality of alerts, wherein each weight value relates to an importance or criticality of the corresponding alert category; and
calculate a priority score for each of the plurality of alerts, wherein calculating the priority score for a respective alert of the plurality of alerts comprises determining a summation of products of each score value for the respective alert with its corresponding weight value; and
display the plurality of alerts on a user interface, wherein the plurality of alerts are sorted based on their respective priority scores.

7. The non-transitory program storage device of claim 6, wherein at least one of the plurality of alert categories comprises: a number of services affected by the respective alert; a severity level of the respective alert; a role of the respective alert; a number of secondary alerts for the respective alert; or a class of CIs associated with the respective alert.

8. The non-transitory program storage device of claim 6, wherein the instructions to cause the one or more programmable control devices to display the plurality of alerts on the user interface further comprise instructions to:
group the plurality of alerts into one or more groups based on the respective priority scores of the plurality of alerts.

9. The non-transitory program storage device of claim 6, wherein the instructions to cause the one or more programmable control devices to calculate the priority score for a respective alert of the plurality of alerts further comprise instructions to:
apply one or more supervised or semi-supervised machine learning techniques to historical user activity data for the CMDB.

10. The non-transitory program storage device of claim 6, wherein the instructions to cause one or more programmable control devices to calculate the priority score for the respective alert of the plurality of alerts further comprise instructions to:
recalculate the priority score for the respective alert upon an occurrence of one or more triggers.

11. The non-transitory program storage device of claim 10, wherein at least one of the one or more triggers comprises: a change in a number of services affected by the respective alert; a change in severity of the respective alert; a change in role of the respective alert; a change in number or class of CIs associated with the respective alert; a change in the number of secondary alerts for the respective alert; a passage of a predetermined amount of time; an addition of one or more CIs to the CMDB; or a deletion of one or more CIs from the CMDB.

12. The non-transitory program storage device of claim 6, wherein the instructions cause the one or more programmable control devices to store, as metadata associated with the respective alert, information reflecting how the priority score for the respective alert was calculated.

13. The non-transitory program storage device of claim 6, further comprising instructions to cause the one or more programmable control devices to:
store, in the CMDB, historical priority score information for the plurality of alerts over a period of time.

14. A computer-implemented method, comprising:
receiving a plurality of alerts related to configuration items, CIs, stored in a configuration management database, CMDB, wherein a configuration item, CI, refers to a record for any component in an enterprise network;
obtaining a score value for the each of the plurality of alerts in each of a plurality of alert categories, wherein each score value relates to a characteristic or degree of a corresponding alert category for the respective alert;
obtaining a weight value corresponding to each of the plurality of alert categories for each of the plurality of alerts, wherein each weight value relates to an importance or criticality of the corresponding alert category; and
calculating a priority score for each of the plurality of alerts, wherein calculating the priority score for a respective alert of the plurality of alerts comprises determining a summation of products of each score value for the respective alert with its corresponding weight value; and
displaying the plurality of alerts on a user interface, wherein the plurality of alerts are sorted based on their respective priority scores.

15. The method of claim 14, wherein at least one of the plurality of alert categories comprises: a number of services affected by the respective alert; a severity level of the respective alert; a role of the respective alert; a number of secondary alerts for the respective alert; or a class of CIs associated with the respective alert.

## Patentansprüche

1. System, umfassend:
einen nicht-transitorischen Speicher; und
einen oder mehrere Hardware-Prozessoren, welche dazu eingerichtet sind, Anweisungen von dem nicht-transitorischen Speicher auszulesen, um das System zu veranlassen:
für jedes Warnung-Element einer Mehrzahl von Warnung-Elementen, welche sich auf Konfiguration-Elemente, CIs, beziehen, welche in einer Konfiguration-Management-Datenbank, CMDB, gespeichert sind, wobei sich ein Konfiguration-Element, Cl, auf einen Datensatz für eine beliebige Komponente in einem Enterprise-Netzwerk bezieht:
Erhalten eines Punktzahl-Werts für jede einer Mehrzahl von Kategorien, wobei sich jeder Punktzahl-Wert auf eine Charakteristik oder einen Grad einer entsprechenden Kategorie für das entsprechende Warnung-Element bezieht;
Erhalten eines Gewichtung-Wertes, welcher jeder der Mehrzahl von Kategorien entspricht, wobei sich jeder Gewichtung-Wert auf eine Wichtigkeit oder eine Gefährlichkeit der entsprechenden Kategorie bezieht; und
Berechnen einer Prioritätspunktzahl für das jeweilige Warnung-Element, indem die Produkte jedes Punktzahl-Werts für das entsprechende Warnung-Element und sein entsprechender Gewichtung-Wert zusammenaddiert werden; und
Anzeigen der Mehrzahl von Warnung-Elementen auf einer Benutzerschnittstelle, wobei die Mehrzahl von Warnung-Elementen auf Grundlage ihrer jeweiligen Prioritätspunktzahlen sortiert werden.

2. System nach Anspruch 1, wobei wenigstens eine der Mehrzahl von Kategorien umfasst:
eine Anzahl von Diensten, welche durch das jeweilige Warnung-Element beeinflusst werden; einen Schweregrad des jeweiligen Warnung-Elements; eine Rolle des jeweiligen Warnung-Elements; eine Anzahl sekundärer Warnung-Elemente für das jeweilige Warnung-Element; oder eine Klasse von Konfiguration-Elementen, CIs, welche dem jeweiligen Warnung-Element zugeordnet sind.

3. System nach Anspruch 1, wobei die Anweisungen, um das System dazu zu veranlassen, die Mehrzahl von Warnung-Elementen auf der Benutzerschnittstelle anzuzeigen, ferner Anweisungen umfassen, zum:
Gruppieren der Mehrzahl von Warnung-Elementen auf Grundlage der jeweiligen Prioritätspunktzahlen der Mehrzahl von Warnung-Elementen in eine oder mehrere Gruppen.

4. System nach Anspruch 1, wobei die Anweisungen, um das System dazu zu veranlassen, die Prioritätspunktzahl für das jeweilige Warnung-Element der Mehrzahl von Warnung-Elementen zu berechnen, ferner Anweisungen umfassen, zum:
Anwenden einer oder mehrerer überwachten oder halbüberwachten Maschinen-Lerntechniken auf historische Benutzeraktivitätsdaten für das System.

5. System nach Anspruch 1, wobei die Anweisungen, um das System dazu zu veranlassen, die Prioritätspunktzahl für das jeweilige Warnung-Element der Mehrzahl von Warnung-Elementen zu berechnen, ferner Anweisungen umfassen, zum:
Neuberechnen der Prioritätspunktzahl für das jeweilige Warnung-Element auf ein Auftreten eines oder mehrerer Trigger hin.

6. Nicht-transitorische Programm-Speicher-Vorrichtung, welche durch eine oder mehrere programmierbare Steuervorrichtungen auslesbar ist und Anweisungen darauf gespeichert umfasst, welche, wenn durch die eine oder die mehreren programmierbaren Steuervorrichtungen ausgeführt, die eine oder die mehreren programmierbaren Steuervorrichtungen zu folgendem veranlassen:
Empfangen einer Mehrzahl von Warnungen, welche sich auf Konfiguration-Elemente, CIs, beziehen, welche in einer Konfiguration-Management-Datenbank, CMDB, gespeichert sind, wobei sich ein Konfiguration-Element, Cl, auf einen Datensatz für eine beliebige Komponente in einem Enterprise-Netzwerk bezieht;
Erhalten eines Punktzahl-Werts für jede der Mehrzahl von Warnungen in jeder einer Mehrzahl von Warnung-Kategorien, wobei sich jeder Punktzahl-Wert auf eine Charakteristik oder einen Grad einer entsprechenden Warnung-Kategorie für die entsprechende Warnung der Mehrzahl von Warnungen bezieht;
Erhalten eines Gewichtung-Wertes, welcher jeder der Mehrzahl von Warnung-Kategorien entspricht, für jede der Mehrzahl von Warnungen, wobei sich jeder Gewichtung-Wert auf eine Wichtigkeit oder eine Gefährlichkeit der entsprechenden Warnung-Kategorie bezieht; und
Berechnen einer Prioritätspunktzahl für jede der Mehrzahl von Warnungen, wobei das Berechnen der Prioritätspunktzahl für eine entsprechende Warnung der Mehrzahl von Warnungen ein Bestimmen einer Summierung von Produkten jedes Punktzahl-Werts für die entsprechende Warnung mit ihrem entsprechenden Gewichtung-Wert umfasst; und
Anzeigen der Mehrzahl von Warnungen auf einer Benutzerschnittstelle, wobei die Mehrzahl von Warnungen auf Grundlage ihrer jeweiligen Prioritätspunktzahlen sortiert werden.

7. Nicht-transitorische Programm-Speicher-Vorrichtung nach Anspruch 6, wobei wobei wenigstens eine der Mehrzahl von Warnung-Kategorien umfasst:
eine Anzahl von Diensten, welche durch die jeweilige Warnung beeinflusst werden; einen Schweregrad der jeweiligen Warnung; eine Rolle der jeweiligen Warnung; eine Anzahl sekundärer Warnungen für die jeweilige Warnung; oder eine Klasse von CIs, welche der jeweiligen Warnung zugeordnet sind.

8. Nicht-transitorische Programm-Speicher-Vorrichtung nach Anspruch 6, wobei die Anweisungen, um die eine oder die mehreren programmierbaren Steuervorrichtungen dazu zu veranlassen, die Mehrzahl von Warnungen auf der Benutzerschnittstelle anzuzeigen, ferner Anweisungen umfassen, zum:
Gruppieren der Mehrzahl von Warnungen auf Grundlage der jeweiligen Prioritätspunktzahlen der Mehrzahl von Warnungen in eine oder mehrere Gruppen.

9. Nicht-transitorische Programm-Speicher-Vorrichtung nach Anspruch 6, wobei die Anweisungen, um die eine oder die mehreren programmierbaren Steuervorrichtungen dazu zu veranlassen, die Prioritätspunktzahl für eine jeweilige Warnung der Mehrzahl von Warnungen zu berechnen, ferner Anweisungen umfassen, zum:
Anwenden einer oder mehrerer überwachten oder halbüberwachten Maschinen-Lerntechniken auf historische Benutzeraktivitätsdaten für die CMDB.

10. Nicht-transitorische Programm-Speicher-Vorrichtung nach Anspruch 6, wobei die Anweisungen, um die eine oder die mehreren programmierbaren Steuervorrichtungen dazu zu veranlassen, die Prioritätspunktzahl für die jeweilige Warnung der Mehrzahl von Warnungen zu berechnen, ferner Anweisungen umfassen, zum:
Neuberechnen der Prioritätspunktzahl für die jeweilige Warnung auf ein Auftreten eines oder mehrerer Trigger hin.

11. Nicht-transitorische Programm-Speicher-Vorrichtung nach Anspruch 10, wobei wenigstens einer des einen oder der mehreren Trigger umfasst: eine Änderung einer Anzahl von Diensten, welche durch die jeweilige Warnung beeinflusst werden; eine Änderung deiner Schwere der jeweiligen Warnung; eine Änderung einer Rolle der jeweiligen Warnung; eine Änderung einer Anzahl oder einer Klasse von CIs, welche der jeweiligen Warnung zugeordnet sind, eine Änderung einer Anzahl sekundärer Warnungen für die jeweilige Warnung; einen Ablauf einer vorbestimmten Zeitmenge, ein Hinzufügen einer oder mehrerer CIs in die CMDB; eine Löschung einer oder mehrerer CIs aus der CMDB.

12. Nicht-transitorische Programm-Speicher-Vorrichtung nach Anspruch 6, wobei die Anweisungen die eine oder die mehreren programmierbaren Steuervorrichtungen dazu zu veranlassen, als Metadaten, welche der jeweiligen Warnung zugeordnet sind, Informationen zu speichern, welche wiedergeben, wie die Prioritätspunktzahl für die jeweilige Warnung berechnet worden ist.

13. Nicht-transitorische Programm-Speicher-Vorrichtung nach Anspruch 6, ferner umfassend Anweisungen, um die eine oder die mehreren programmierbaren Steuervorrichtungen zu folgendem zu veranlassen:
Speichern, in der CMDB, historischer Prioritätspunktzahl-Informationen für die Mehrzahl von Warnungen über eine Zeitspanne.

14. Computerimplementiertes Verfahren, umfassend:
Empfangen einer Mehrzahl von Warnungen, welche sich auf Konfiguration-Elemente, CIs, beziehen, welche in einer Konfiguration-Management-Datenbank, CMDB, gespeichert sind, wobei sich ein Konfiguration-Element, Cl, auf einen Datensatz für eine beliebige Komponente in einem Enterprise-Netzwerk bezieht;
Erhalten eines Punktzahl-Werts für jede der Mehrzahl von Warnungen in jeder einer Mehrzahl von Warnung-Kategorien, wobei sich jeder Punktzahl-Wert auf eine Charakteristik oder einen Grad einer entsprechenden Warnung-Kategorie für die entsprechende Warnung bezieht;
Erhalten eines Gewichtung-Wertes, welcher jeder der Mehrzahl von Warnung-Kategorien entspricht, für jede der Mehrzahl von Warnungen, wobei sich jeder Gewichtung-Wert auf eine Wichtigkeit oder eine Gefährlichkeit der entsprechenden Warnung-Kategorie bezieht; und
Berechnen einer Prioritätspunktzahl für jede der Mehrzahl von Warnungen, wobei das Berechnen der Prioritätspunktzahl für eine entsprechende Warnung der Mehrzahl von Warnungen ein Bestimmen einer Summierung von Produkten jedes Punktzahl-Werts für die entsprechende Warnung mit ihrem entsprechenden Gewichtung-Wert umfasst; und
Anzeigen der Mehrzahl von Warnungen auf einer Benutzerschnittstelle, wobei die Mehrzahl von Warnungen auf Grundlage ihrer jeweiligen Prioritätspunktzahlen sortiert werden.

15. Verfahren nach Anspruch 14, wobei wenigstens eine der Mehrzahl von Warnung-Kategorien umfasst: eine Anzahl von Diensten, welche durch die jeweilige Warnung beeinflusst werden; einen Schweregrad der jeweiligen Warnung; eine Rolle der jeweiligen Warnung; eine Anzahl sekundärer Warnungen für die jeweilige Warnung; oder eine Klasse von CIs, welche der jeweiligen Warnung zugeordnet sind.

## Revendications

1. Système, comprenant :
une mémoire non transitoire ; et
un ou plusieurs processeurs matériels configurés pour lire des instructions à partir de la mémoire non transitoire pour amener le système à :
pour chaque élément d'alerte d'une pluralité d'éléments d'alerte, qui sont liés à des éléments de configuration, CI, stockés dans une base de données de gestion de configuration, CMDB, où un élément de configuration, CI, fait référence à un enregistrement pour tout composant dans un réseau d'entreprise :
obtenir une valeur de score pour chacune d'une pluralité de catégories, où chaque valeur de score se rapporte à une caractéristique ou à un degré d'une catégorie correspondante pour l'élément d'alerte respectif ;
obtenir une valeur de poids correspondant à chacune de la pluralité de catégories, où chaque valeur de poids se rapporte à une importance ou à une criticité de la catégorie correspondante ; et
calculer un score de priorité pour l'élément d'alerte respectif en additionnant ensemble les produits de chaque valeur de score pour l'élément d'alerte respectif et sa valeur de poids correspondante ; et
afficher la pluralité d'éléments d'alerte sur une interface utilisateur, où la pluralité d'éléments d'alerte sont triés sur la base de leurs scores de priorité respectifs.

2. Système de la revendication 1, dans lequel au moins l'une de la pluralité de catégories comprend : un certain nombre de services affectés par l'élément d'alerte respectif ; un niveau de gravité de l'élément d'alerte respectif ; un rôle de l'élément d'alerte respectif ; un certain nombre d'éléments d'alerte secondaire pour l'élément d'alerte respectif ; ou une classe d'éléments de configuration, CI, associés à l'élément d'alerte respectif.

3. Système de la revendication 1, dans lequel les instructions servant à amener le système à afficher la pluralité d'éléments d'alerte sur l'interface utilisateur comprennent en outre des instructions pour :
regrouper la pluralité d'éléments d'alerte en un ou plusieurs groupes sur la base des scores de priorité respectifs de la pluralité d'éléments d'alerte.

4. Système de la revendication 1, dans lequel les instructions servant à amener le système à calculer le score de priorité pour l'élément d'alerte respectif de la pluralité d'éléments d'alerte comprennent en outre des instructions pour :
appliquer une ou plusieurs techniques d'apprentissage automatique supervisé ou semi-supervisé à des données d'activité d'utilisateur historique pour le système.

5. Système de la revendication 1, dans lequel les instructions servant à amener le système à calculer le score de priorité pour l'élément d'alerte respectif de la pluralité d'éléments d'alerte comprennent en outre des instructions pour :
recalculer le score de priorité pour l'élément d'alerte respectif lors de la survenue d'un ou plusieurs déclencheurs.

6. Dispositif de stockage de programme non transitoire, lisible par un ou plusieurs dispositifs de commande programmables et comprenant des instructions stockées sur celui-ci, qui, lorsqu'elles sont exécutées par lesdits un ou plusieurs dispositifs de commande programmables, amènent lesdits un ou plusieurs dispositifs de commande programmables à :
recevoir une pluralité d'alertes liées à des éléments de configuration, CI, stockés dans une base de données de gestion de configuration, CMDB, où un élément de configuration, CI, fait référence à un enregistrement pour tout composant dans un réseau d'entreprise ;
obtenir une valeur de score pour chacune de la pluralité d'alertes dans chacune d'une pluralité de catégories d'alerte, où chaque valeur de score se rapporte à une caractéristique ou à un degré d'une catégorie d'alerte correspondante pour l'alerte respective de la pluralité d'alertes ;
obtenir une valeur de poids correspondant à chacune de la pluralité de catégories d'alerte pour chacune de la pluralité d'alertes, où chaque valeur de poids se rapporte à une importance ou à une criticité de la catégorie d'alerte correspondante ; et
calculer un score de priorité pour chacune de la pluralité d'alertes, où le calcul du score de priorité pour une alerte respective de la pluralité d'alertes comprend la détermination d'une sommation de produits de chaque valeur de score pour l'alerte respective avec sa valeur de poids correspondante ; et
afficher la pluralité d'alertes sur une interface utilisateur, où la pluralité d'alertes sont triées sur la base de leurs scores de priorité respectifs.

7. Dispositif de stockage de programme non transitoire de la revendication 6, dans lequel au moins l'une de la pluralité de catégories d'alerte comprend : un certain nombre de services affectés par l'alerte respective ; un niveau de gravité de l'alerte respective ; un rôle de l'alerte respective ; un certain nombre d'alertes secondaires pour l'alerte respective ; ou une classe de CI associés à l'alerte respective.

8. Dispositif de stockage de programme non transitoire de la revendication 6, dans lequel les instructions servant à amener les un ou plusieurs dispositifs de commande programmables à afficher la pluralité d'alertes sur l'interface utilisateur comprennent en outre des instructions pour :
regrouper la pluralité d'alertes en un ou plusieurs groupes sur la base des scores de priorité respectifs de la pluralité d'alertes.

9. Dispositif de stockage de programme non transitoire de la revendication 6, dans lequel les instructions servant à amener les un ou plusieurs dispositifs de commande programmables à calculer le score de priorité pour une alerte respective de la pluralité d'alertes comprennent en outre des instructions pour :
appliquer une ou plusieurs techniques d'apprentissage automatique supervisé ou semi-supervisé à des données d'activité d'utilisateur historique pour la CMDB.

10. Dispositif de stockage de programme non transitoire de la revendication 6, dans lequel les instructions servant à amener un ou plusieurs dispositifs de commande programmables à calculer le score de priorité pour l'alerte respective de la pluralité d'alertes comprennent en outre des instructions pour :
recalculer le score de priorité pour l'alerte respective lors de la survenue d'un ou plusieurs déclencheurs.

11. Dispositif de stockage de programme non transitoire de la revendication 10, dans lequel au moins l'un des un ou plusieurs déclencheurs comprend : un changement du nombre de services affectés par l'alerte respective ; un changement de gravité de l'alerte respective ; un changement de rôle de l'alerte respective ; un changement du nombre ou de classe de CI associés à l'alerte respective ; un changement du nombre d'alertes secondaires pour l'alerte respective ; un passage d'une durée prédéterminée ; une addition d'un ou plusieurs CI à la CMDB ; ou une suppression d'un ou plusieurs CI de la CMDB.

12. Dispositif de stockage de programme non transitoire de la revendication 6, dans lequel les instructions amènent les un ou plusieurs dispositifs de commande programmables à stocker, en tant que métadonnées associées à l'alerte respective, des informations reflétant la façon dont le score de priorité pour l'alerte respective a été calculé.

13. Dispositif de stockage de programme non transitoire de la revendication 6, comprenant en outre des instructions pour amener les un ou plusieurs dispositifs de commande programmables à :
stocker, dans la CMDB, des informations de score de priorité historiques pour la pluralité d'alertes pendant une période.

14. Procédé mis en œuvre par ordinateur, comprenant les étapes consistant à :
recevoir une pluralité d'alertes liées à des éléments de configuration, CI, stockés dans une base de données de gestion de configuration, CMDB, où un élément de configuration, CI, fait référence à un enregistrement pour tout composant dans un réseau d'entreprise ;
obtenir une valeur de score pour chacune de la pluralité d'alertes dans chacune d'une pluralité de catégories d'alerte, où chaque valeur de score se rapporte à une caractéristique ou à un degré d'une catégorie d'alerte correspondante pour l'alerte respective ;
obtenir une valeur de poids correspondant à chacune de la pluralité de catégories d'alerte pour chacune de la pluralité d'alertes, où chaque valeur de poids se rapporte à une importance ou à une criticité de la catégorie d'alerte correspondante ; et
calculer un score de priorité pour chacune de la pluralité d'alertes, où le calcul du score de priorité pour une alerte respective de la pluralité d'alertes comprend la détermination d'une sommation de produits de chaque valeur de score pour l'alerte respective avec sa valeur de poids correspondante ; et
afficher la pluralité d'alertes sur une interface utilisateur, où la pluralité d'alertes sont triées sur la base de leurs scores de priorité respectifs.

15. Procédé de la revendication 14, dans lequel au moins l'une de la pluralité de catégories d'alerte comprend : un certain nombre de services affectés par l'alerte respective ; un niveau de gravité de l'alerte respective ; un rôle de l'alerte respective ; un certain nombre d'alertes secondaires pour l'alerte respective ; ou une classe de CI associés à l'alerte respective.
